# EUROPEAN PATENT APPLICATION

(11) **EP 2 500 130 A2**
(43) Date of publication of application: **19.09.2012**
(21) Application number: 12002665.3
(22) Date of filing: 13.08.2007
(51) Int. Cl.: B23Q 1/70, B23Q 1/54

(54) **Machining head for machine tool**

(30) Priority: 23.08.2006 JP 2006226210; 30.08.2006 JP 2006232882
(62) Divisional of application: 07792444.7
(71) Applicant: Tsudakoma Kogyo Kabushiki Kaisha, Kanazawa-shi, Ishikawa 921-8650 (JP)
(72) Inventor: Tatsuda Yoshinori, Ishikawa-ken 921-8650 (JP)
(74) Representative: Samson & Partner

(57) **Abstract**

A machining head (10) for a machine tool comprises a spindle unit (20) including a spindle (21) to which a tool is attachable and a support head component (30) that supports the spindle unit (20), the support head component (30) including an index mechanism that rotates the spindle unit (20) at least about an axis line extending perpendicular to a rotary axis line of the spindle (21) in order to index an angular position of the spindle unit (20),
wherein the support head component (30) includes first and second support portions (30a, 30b) respectively including first and second support shafts (32, 37b, 38b, 39b) disposed such that axes of the first and second support shafts (32, 37b, 38b, 39b) are aligned with the rotary axis line and that the first and second support shafts (32, 37b, 38b, 39b) face each other with the spindle unit (20) interposed therebetween, wherein the index mechanism includes a drive motor (33) including a motor rotor (33a) and a motor stator (33b), the motor rotor (33a) being disposed concentrically with the support shaft (32, 37b) around the support shaft (32, 37b) within a housing (31a) of the support head component (30) and surrounding the support shaft (32, 37b), and wherein the index mechanism is disposed at one of the first and second support portions (30a, 30b).

## Description

### Technical Field

The present invention relates to machining heads for machine tools, and particularly, to a machining head equipped with an index mechanism, which is used in a compound processing machine (machine tool), such as a five-axis processing machine (that is, a processing machine capable of controlling five axes simultaneously) and a multi-face processing machine.

### Background Art

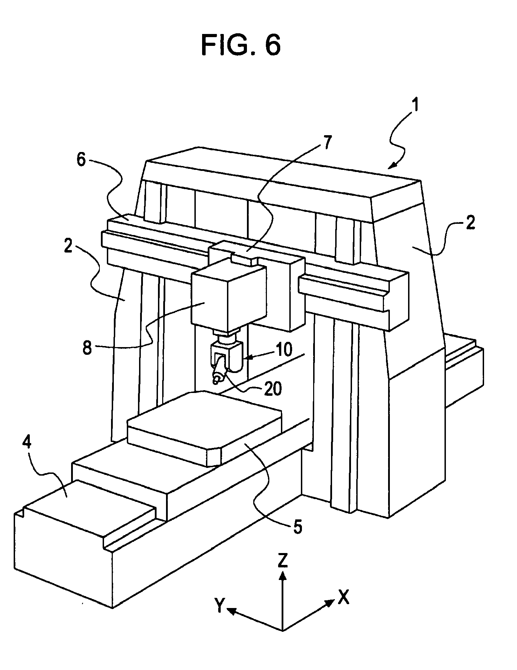

Fig. 6 illustrates a double-housing machine tool 1 (machining center) as an example of a compound processing machine. The double-housing machine tool 1 includes left and right columns 2, 2 attached to a bed 4, a cross rail 6 movable vertically (in Z-axis direction) on the columns 2, 2, a saddle 7 movable horizontally (in Y-axis direction) on the cross rail 6, a ram 8 movable in the Z-axis direction on the saddle 7, and a table 5 movable in the front-back direction (in X-axis direction) on the bed 4. Furthermore, the ram 8 has a machining head 10 attached thereto, which includes a spindle unit 20 equipped with a spindle to which a tool can be attached.

When machining a workpiece, the double-housing machine tool 1 moves the table 5, the cross rail 6, the saddle 7, and the ram 8, and the machining head 10 indexes the angular position (rotation position) of the spindle unit 20 in accordance with numerical control based on a preliminarily set program. Accordingly, in the machine tool, the tool can be set at appropriate angles for machining various surfaces of the workpiece so that the workpiece can be cut into complicated shapes.

In order to achieve this, the machining head is equipped with an index mechanism for indexing the angular position of the spindle unit 20. A machining head equipped with a drive motor of a direct-drive type (which will be referred to as a DD motor hereinafter) as means for driving the index mechanism is disclosed (for example, Patent Document described below). The DD motor includes a motor stator and a motor rotor that are disposed within a housing of the machining head 10, and the rotor is linked with a support shaft that supports the spindle unit.

In the machining head, in order to index the angle of the spindle unit 20 in accordance with the numerical control, it is necessary to detect the angular position of the spindle unit 20 (a rotation phase of the support shaft). Hence, the machining head typically includes a rotation detector (for example, an encoder). The rotation detector is attached to the support shaft in the housing of the machining head. In addition to the DD motor and the rotation detector, the machining head includes as a necessary configuration a clamp mechanism for maintaining the position of the angle-indexed spindle unit. Further, the machining head may include a rotary joint for supplying processing fluid (described below) to the spindle unit.

A machining head disclosed in Japanese Unexamined Patent Application Publication No. 2-116437 (referred to as Patent Document 1 hereinafter) includes a spindle unit (head) and a support head component (head support portion) that supports the spindle unit, and has an inner-rotor-type DD motor as driving means, in which a rotor faces an inner periphery surface of a stator, in the support head component. (It is to be noted that parenthesized names of components correspond to names of components used in corresponding Patent Document, which will be applied to Patent Documents 2 to 4 described below.)

In the machining head according to Patent Document 1, a bearing for rotatably supporting a support shaft (drive shaft) that supports the spindle unit is disposed outside a range occupied by the DD motor in the axial direction of the support shaft. This results in the dimension of the support shaft in the machining head being increased in the axial direction of the support shaft, causing the machining head to become large in its overall size.

Meanwhile, a configuration of an index device for a machine tool with a rotary shaft of the index device driven by a DD motor is disclosed in Japanese Unexamined Patent Application Publication No. 4-2443 (referred to as Patent Document 2 hereinafter). In the configuration, a bearing that supports the rotary shaft is disposed within a range occupied by the DD motor in the axial direction of the rotary shaft.

With the index device disclosed in Patent Document 2, an outer-rotor-type DD motor is employed, in which a rotor faces an outer periphery surface of a stator. In the index device, the rotary shaft (transmission shaft) is supported rotatably by a main body using a bearing fitted around the rotor.

However, with the index device disclosed in Patent Document 2, since the bearing surrounds the DD motor, a large-diameter bearing has to be used. In this case, a larger diameter can lead to lower run-out accuracy, which can further cause deterioration in indexing accuracy and machining accuracy. In addition, a bearing with a larger diameter becomes more expensive, which can cause increase in manufacturing cost of the support head component.

A machining head (spindle head) disclosed in Japanese Unexamined Patent Application Publication No. 2004-520944 (referred to as Patent Document 3 hereinafter) includes a spindle unit (tool spindle) supported by a single rotary shaft (second half head) rotated by the DD motor. That is, the machining head with Patent Document 1 has a support structure of the spindle unit in a cantilevered manner.

However, with the support structure in a cantilevered manner, support stiffness is low, likely resulting in vibration being generated. This deteriorates machining accuracy. Owing to this, a support structure disclosed in Japanese Unexamined Patent Application Publication No. 2003-48135 (referred to as Patent Document 4 hereinafter) may be used instead of the cantilevered support structure.

With a machining head (operation head) disclosed in Patent Document 4, a support head component (first support portion) that supports a spindle unit (tool holder) includes support portions (a pair of arms) disposed with the spindle unit interposed therebetween. The spindle unit is supported from both sides by a pair of support shafts, the support shafts being rotatably supported within the support portions and disposed to face each other with their axes aligned with each other. With this configuration, the supporting stiffness increases as compared with the machining head with the cantilevered support structure. Hence, deterioration in machining accuracy as a result of vibration does not occur.

However, with the machining head disclosed in Patent Document 4, the machining head increases in size, causing the machining accuracy to be deteriorated.

Specifically, with the conventional machining head, similarly to the machining head disclosed in Patent Document 3, the DD motor is provided corresponding to the support shaft of the spindle unit. In the machining head disclosed in Patent Document 4, DD motors are provided respectively for support portions in correspondence with the support shafts.

With this configuration, in addition to bearings for rotatably supporting the DD motors and the support shafts, the rotation detector, the clamp mechanism, and the rotary joint have to be disposed in the support portions of the machining head. In view of design, a dimension in the axial direction of the support shaft of each support portion has to be increased. As a result, the machining head increases in size.

In the case of the double-housing machine tool described above, for example, a machining head having a large size will inevitably cause an increase in size of the machine tool to attain a sufficient movement range for the machining head or will limit the work space on the machine tool. In addition, an increase in weight due to the size increase can hinder the movement of the machining head and thus cause an adverse effect on the workability. Moreover, depending on the weight of the machining head, the cross beam can become bent, causing the machining accuracy to be deteriorated.
[Patent Document 1] Japanese Unexamined Patent Application Publication No. 2-116437
[Patent Document 2] Japanese Unexamined Patent Application Publication No. 4-2443
[Patent Document 3] Japanese Unexamined Patent Application Publication No. 2004-520944
[Patent Document 4] Japanese Unexamined Patent Application Publication No. 2003-48135

Further, from EP 1 228 839 (A2) a drive head is known that has a housing and at least one multi-pole external rotor electric motor concentric to the rotation axis for a setting movement, provided by an annular soft magnetic stator with single pole windings and an annular rotor yoke provided with permanent magnets, fitted to a rotor body at one side.

### Disclosure of Invention

### Problems to be Solved by the Invention

Accordingly, it is an object of the present invention to provide a machining head for a machine tool equipped with an index mechanism, in which high machining accuracy can be achieved without having to increase the size of the machining head.

### Means for Solving the Problems

The present invention is directed to a machining head for a machine tool, which includes a spindle unit including a spindle to which a tool is attachable, and a support head component that supports the spindle unit, the support head component including an index mechanism that rotates the spindle unit at least about an axis line extending perpendicular to a rotary axis line of the spindle in order to index an angular position of the spindle unit.

According to a first invention, the index mechanism includes a support shaft fixed to the spindle unit and rotatably provided within a housing of the support head component, and a drive motor including a motor rotor and a motor stator, the motor rotor being disposed concentrically with the support shaft around the support shaft within the housing of the support head component and being linked to the support shaft, the motor stator surrounding the motor rotor to face an outer periphery of the motor rotor. The bearing for rotatably supporting the support shaft is disposed within the motor rotor in a radial direction within a range occupied by the drive motor in a rotary axis line direction of the support shaft.

Also, in view of the first invention, the support shaft may have a large-diameter section around which the motor rotor is fitted, and a shaft section rotatably supported by the bearing. The housing may have a cylindrical portion disposed between the large-diameter section and the shaft section. The bearing may be interposed between the cylindrical portion and the support shaft.

According to a second invention, the support head component includes first and second support portions respectively including first and second support shafts disposed such that axes of the first and second support shafts are aligned with the rotary axis line and that the first and second support shafts face each other with the spindle unit interposed therebetween. The index mechanism includes a drive motor including a motor rotor and a motor stator, the motor rotor being disposed concentrically with the support shaft around the support shaft within a housing of the support head component and surrounding the support shaft. The index mechanism is disposed at one of the first and second support portions.

Also, in view of the second invention, the support head component may include a rotation detector for detecting a rotation phase of the support shaft. The rotation detector may be disposed at the other of the first and second support portions which is not provided with the drive motor. Further, the support head component may include a clamp mechanism for detecting an angular position of the spindle unit. The clamp mechanism may be disposed at the other of the first and second support portions which is not provided with the drive motor.

### Advantages

With the machining head for a machine tool according to the first invention, an inner-rotor-type DD motor is used as means for driving the index mechanism, and the bearing for rotatably supporting the support shaft is disposed within the DD motor in the radial direction within the range occupied by the DD motor in the axial direction of the support shaft. Hence, the dimension of the support shaft in the machining head in the axial direction of the support shaft is prevented from being increased. Thus, the machining head can be avoided from being increased in the overall size. A bearing with a smaller diameter can be used, thereby reliably preventing the machine tool from being increased in size and reliably preventing the machining accuracy from being deteriorated.

Also, with the machining head for a machine tool according to the second invention, the DD motor used as means for driving the index mechanism is contained in one of the first and second support portions defining a primay portion of the support head component. Thus, the other has a space. By appropriately disposing other members (a support shaft, a rotation detector, a clamp mechanism, a rotary joint, etc.) in either of the first and second support portions, the support head (machining head) can be prevented from being increased in size. Accordingly, the above-mentioned problems resulted from the increase in size of the machining head can be reliably prevented.

Further, with the second embodiment, by disposing the rotation detector and/or the clamp mechanism in the other of the first and second support portions which is not provided with the DD motor, the rotation detector and/or the clamp mechanism for preventing the support head component from being increased in size can be further easily attained.

### Brief Description of Drawings

[Fig. 1] Fig. 1 is a front partially-cutaway view of a support head component included in a machining head according to an embodiment of the present invention.
[Fig. 2] Fig. 2 shows a side view of the support head component included in the machining head according to the embodiment of the present invention.
[Fig. 3] Fig. 3 is a front partially-cutaway view of the machining head according to the embodiment of the present invention.
[Fig. 4] Fig. 4 shows partially-cutaway views illustrating modified examples of the support head component according to the embodiment.
[Fig. 5] Fig. 5 is a front partially-cutaway view of a support head component included in a machining head according to another embodiment of the present invention.
[Fig. 6] Fig. 6 is a perspective view showing an example of a machine tool to which the machining head according to the present invention is applied.

### Reference Numerals

| | |
|---|---|
| 1 | machine tool |
| 10 | machining head |
| 20 | spindle unit |
| 21 | spindle |
| 25 | DD motor |
| 25a | rotor |
| 25b | stator |
| 30 | support head component (first support head component) |
| 30a, | 30b leg segment |
| 30c | supporting segment |
| 31a, | 31b housing |
| 32 | rotary shaft |
| 33 | DD motor |
| 33a | rotor |
| 33b | stator |
| 34 | clamp mechanism |
| 34a | clamp sleeve |
| 35, | 36 bearing |
| 37 | rotary joint |
| 37a | distributor |
| 37b | shaft |
| 38 | rotary joint |
| 38a | distributor |
| 38b | shaft |
| 39 | rotary shaft |
| 41, 44 | rotation detector |
| 41a, 44a | detector stator |
| 41b, 44b | detector rotor |
| 50 | second support head component |
| 51 | housing |
| 52 | rotary shaft |
| 53 | DD motor |
| 53a | stator |
| 53b | rotor |
| 54 | clamp sleeve |
| 55 | distributor |
| 56 | bearing (triple cylindrical roller bearing) |
| 60 | support head component |
| 61 | housing |
| 62 | rotary shaft |
| 63 | DD motor |
| 63a | stator |
| 63b | rotor |
| 65 | bearing |
| 67 | rotary joint |
| 67a, 67b | distributor |
| 67c | shaft |
| 68 | rotation detector |
| 70 | bearing holder |
| 70a1 | cylindrical portion |
| 70a2 | flange portion |
| 70a4 | through hole |
| 70b | braking member |
| 70c | screw member |

### Best Modes for Carrying Out the Invention

Embodiments of first and second inventions will now be described with reference to the figures.

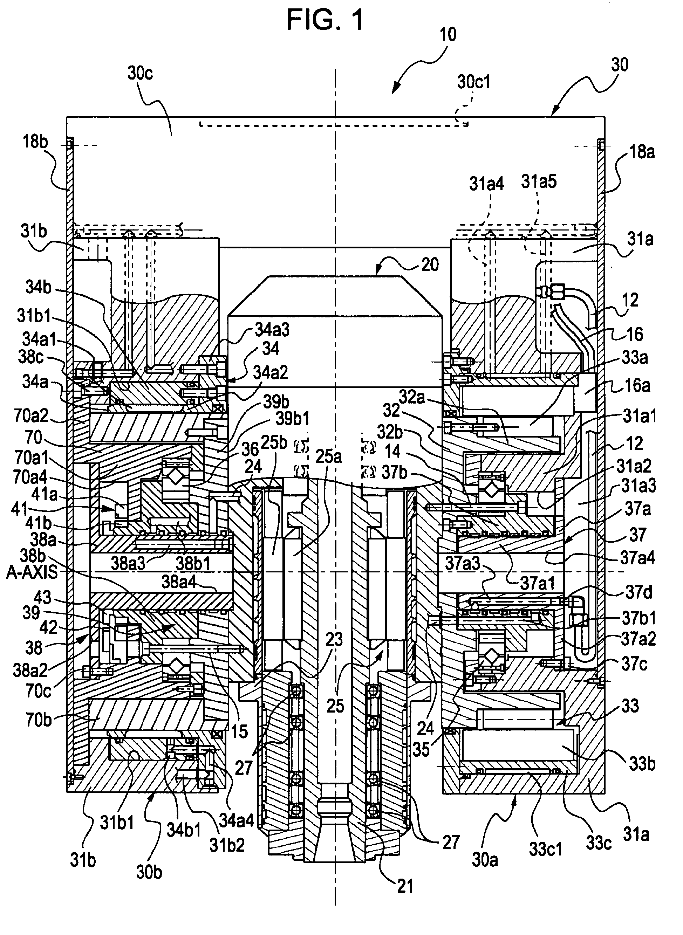

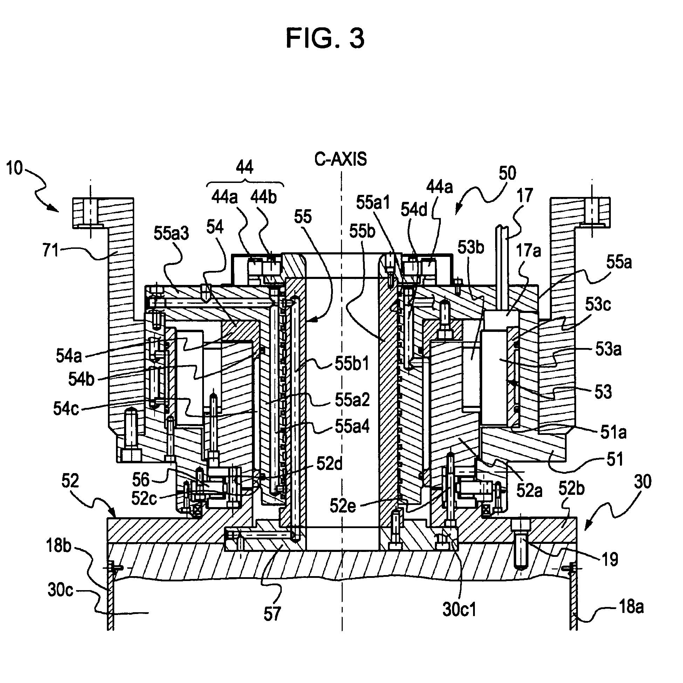

Figs. 1 to 3 illustrate an embodiment of the first invention. A machining head 10 in the figure includes a spindle unit 20 having a spindle 21 to which a tool can be attached, a first support head component 30 (corresponding to "support head component" of the present invention) that supports the spindle unit 20, and a second support head component 50 that supports the first support head component 30 (Fig. 3).

The spindle unit 20 is a spindle head having a drive motor built therein, and the built-in drive motor rotates the spindle 21 at high speed.

A housing 23 of the spindle unit 20 has the spindle 21 extending therethrough and accommodates a drive motor 25 that surrounds the spindle 21. The drive motor 25 includes a rotor 25a fitted around the spindle 21, and a stator 25b facing an outer periphery surface of the rotor 25a. The spindle 21 is rotatably supported by a plurality of bearings 27 (for example, angular contact bearings) arranged in a front-back direction of the drive motor 25 (in the vertical direction in the figure). When an exciting current is supplied to the stator 25b, an excitation force is generated between the rotor 25a and the stator 25b. The rotor 25a rotates in response to the excitation force, whereby the spindle 21 is rotated.

In addition to supporting the spindle unit 20, the first support head component 30 has a function of rotating the spindle unit 20 around an axis line (referred to as "A-axis" hereinafter) extending perpendicular to a rotary axis line of the spindle 21 in order to index the angular position of the spindle unit 20.

The first support head component 30 has the shape of a fork in which the pair of leg segments 30a, 30b corresponding to first and second support portions of the present invention is joined to a supporting segment 30c. The leg segments 30a, 30b respectively contain therein a pair of rotatable support shafts that support the spindle unit 20.

Moreover, in the support head component (the first support head component 30) in this embodiment, a DD motor 33 (corresponding to "drive motor" of the present invention) for rotating the spindle unit 20 is provided only in the leg segment 30a (first support portion) of the two leg segments 30a, 30b. Accordingly, regarding the pair of support shafts, the support shaft in the leg segment 30a will be referred to as a driving support shaft hereinafter, whereas the support shaft in the leg segment 30b will be referred to as a driven support shaft hereinafter. Further, the support head component in this embodiment has a rotation detector and a clamp mechanism to be described below in the leg segment 30b (second support portion) which is not provided with the DD motor 33.

The configuration of the leg segment 30a (first support segment) having the DD motor 33 will be described in detail below.

The leg segment 30a has a housing 31a as a main body. The housing 31a accommodates, for example, a rotor 33a (motor rotor) and a stator 33b (motor stator) that constitute a DD motor 33, the driving support shaft that supports the spindle unit 20, a bearing 35 (for example, cross roller bearing) for rotatably supporting the driving support shaft, and a rotary joint 37 for supplying processing fluid (referred to merely as "fluid" hereinafter) to the spindle unit 20.

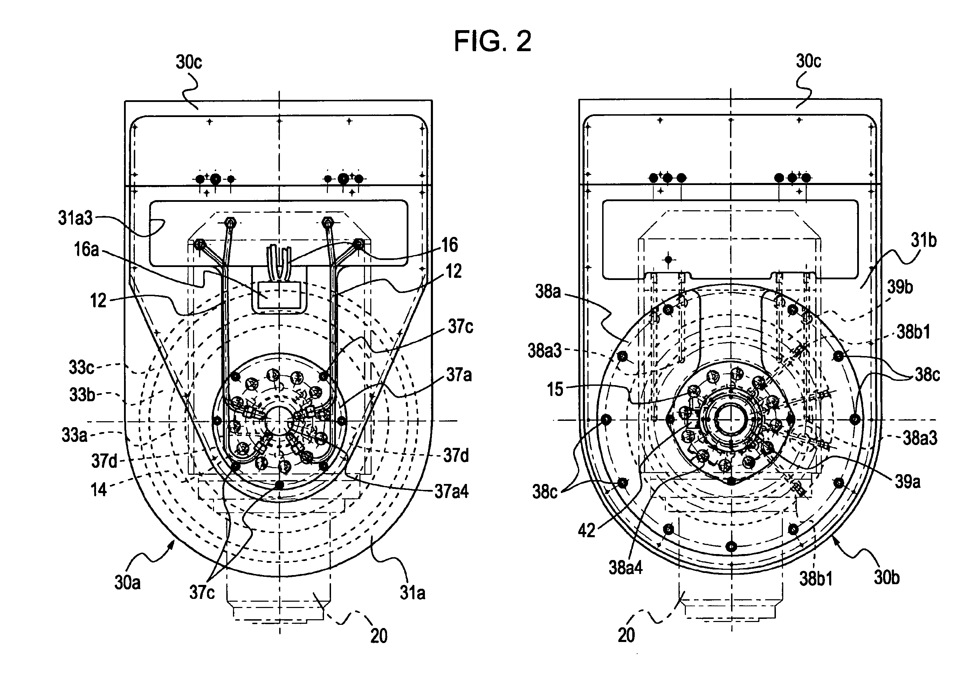

A side of the housing 31a proximate to the leg segment 30b has a large opening through which the DD motor 33 and a rotary shaft to be described below, are inserted. Moreover, the housing 31a also has a cylindrical portion 31a1 extending along the A-axis from a side surface of the housing 31a farthest from the leg segment 30b. The cylindrical portion 31a1 has a through hole 31a2 through which the rotary joint 37 extends along the A-axis. The side surface of the housing 31a farthest from the leg segment 30b has a recess 31a3 through which a fluid-supply pipe and a current-supply cable to be described below extend. A side of the leg segment 30a farthest from the leg segment 31b has a side-surface cover 18a attached thereto. The side-surface cover 18a covers the recess 31a3. Fig. 2 shows a state where the side-surface cover 18a is removed.

The rotary joint 37 includes a distributor 37a fixed to the housing 31a and a shaft 37b rotatably fitted around a cylindrical portion 37a1 of the distributor 37a.

In a state where the distributor 37a extends through the through hole 31a2 of the housing 31a, a flange portion 37a2 of the distributor 37a is attached to the housing 31a with a plurality of screw members 37c arranged in a circumferential direction. Furthermore, the center of the distributor 37a is provided with a through hole 37a4 through which, for example, cables can extend toward the spindle unit 20.

The distributor 37a also has a plurality of fluid channels 37a3 that are arranged at different positions in the circumferential direction. The fluid channels 37a3 are provided for supplying or discharging fluid. On the other hand, the shaft 37b has a plurality of fluid channels 37b1 that correspond to the fluid channels 37a3 of the distributor 37a. In Fig. 1, only one of the fluid channels 37a3 and one of the fluid channels 37b1 are representatively shown.

The fluid channels 37a3 and the fluid channels 37b1 corresponding thereto communicate with each other through annular grooves extending around an engagement surface between the distributor 37a and the shaft 37b. This communication state is maintained even upon rotation of the shaft 37b. Furthermore, each of the fluid channels 37b1 communicates with a fluid supply or discharge port 24 of the spindle unit 20. The distributor 37a and the shaft 37b have seal members interposed therebetween for attaining a sealed state between the annular grooves.

The distributor 37a also has a plurality of fluid supply or discharge ports 37d arranged at different positions in the circumferential direction. Each of the ports 37d is connected to a fluid supply or discharge pipe 12. Fluid supplied from a supply pipe 12 is transferred from the rotary joint 37 to the spindle unit 20 through the corresponding port 24. When the fluid is subject to circulation, the fluid circulating within the spindle unit 20 is discharged to a discharge pipe 2 via the rotary joint 37. The fluid to be supplied to the spindle unit 20 is, for example, cooling oil for cooling the drive motor 25 or the spindle 21 that rotates at high speed, sealing air for preventing cutting chips and powder from entering the spindle unit 20 (i.e., the rotating portion of the spindle 21), and cooling water for cooling the rotating tool and the like used during the machining process.

The DD motor 33 is constituted by the stator 33b secured to the housing 31a and the rotor 33a disposed facing an inner periphery surface of the stator 33b. That is, the DD motor 33 shown in the figures is an inner-rotor-type motor.

The stator 33b is fitted within an inner periphery surface of a stator sleeve 33c fixed to the housing 31a. The stator sleeve 33c has an annular groove 33c1 around an outer periphery surface thereof. On the other hand, the housing 31a has a fluid supply path 31a4 and a fluid discharge path 31a5 that communicate with the annular groove 33c1. A cooling fluid (for example, oil) for cooling the DD motor 33 is supplied from the fluid supply path 31a4 towards the annular groove 33c1 so as to reduce heat generated by the DD motor 33 due to the rotation of the rotor 33a. The annular groove 33c1 has a helical shape so that when fluid is supplied from the fluid supply path 31a4, the fluid circulates the annular groove 33c1 so as to be discharged from the fluid discharge path 31a5 (although not shown specifically in the figures).

The rotor 33a is fitted around an outer periphery surface of a rotary shaft 32 rotatably disposed within the housing 31a. The rotary shaft 32 is disposed concentrically with a rotary axis line of the shaft 37b of the rotary joint 37 and is joined to the shaft 37b with a plurality of screw members arranged in the circumferential direction. The rotor 33a is disposed such that its outer periphery surface faces the inner periphery surface of the stator 33b. The rotor 33a is fitted around an outer periphery surface of a cylindrical portion 32a of the rotary shaft 32 in a relatively non-rotatable manner with respect to the rotary shaft 32.

An end surface 32b of the rotary shaft 32 proximate to the leg segment 30b has the spindle unit 20 fixed thereto with a plurality of screw members 14 arranged in the circumferential direction. In other words, the spindle unit 20 is fixed to the end surface 32b of the rotary shaft 32 so as to be supported by the rotary shaft 32. Consequently, in the leg segment 30a, the rotary shaft 32 and the shaft 37b of the rotary joint 37 rotating together with the rotary shaft 32 constitute the driving support shaft for the spindle unit 20.

In a state where the rotary shaft 32 is joined to the shaft 37b of the rotary joint 37, the cylindrical portion 32a of the rotary shaft 32 surrounds the cylindrical portion 31a1 of the housing 31a with a slight gap therebetween. In other words, in a state where the rotary shaft 32 is joined to the shaft 37b, the cylindrical portion 31a1 of the housing 31a is disposed within the inner periphery surface of the cylindrical portion 32a, i.e., within the rotor 33a in the radial direction, the rotor 33a fitted around the cylindrical portion 32a.

The cylindrical portion 31a1 of the housing 31a and the shaft 37b of the rotary joint 37 arranged within the through hole 31a2 have a bearing 35 interposed therebetween. The bearing 35 provides a state where the shaft 37b is rotatably supported by the housing 31a. Accordingly, with this configuration, the driving support shaft (the shaft 37b of the rotary joint 37 and the rotary shaft 32 joined to the shaft 37b) is rotatably supported by the housing 31a, and is rotated by the DD motor 33.

As described above, in the illustrated embodiment, the driving support shaft includes a large-diameter section (the cylindrical portion 32a of the rotary shaft 32) around which the rotor 33a of the DD motor 33 is fitted, and a shaft section (the shaft 37b of the rotary joint 37) disposed within this large-diameter section in the radial direction and supported rotatably by the bearing 35. The cylindrical portion 31a1 of the housing 31a is disposed between the large-diameter section and the shaft section, and the bearing 35 is interposed between the cylindrical portion 31a1 and the support shaft. Accordingly, the support shaft is rotatably supported by the housing 31a. As shown in the figures, the positioning of the bearing 35 in the A-axis direction is within a range occupied by the DD motor 33 in the A-axis direction.

The configuration of the leg segment 30b (the second support portion) that supports the spindle unit 20 at a position opposite to the leg segment 30a will be described in detail below.

The leg segment 30b has a housing 31b as a main body. The housing 31b accommodates, for example, a clamp mechanism 34 for maintaining an angular position of the spindle unit 20, the driven support shaft (38b, 39b) that supports the spindle unit 20, a bearing 36 for rotatably supporting the driven support shaft (38b, 39b), and a rotary joint 38.

The housing 31b has a through hole 31b1 extending in the A-axis direction. The clamp mechanism 34, the driven support shaft, the bearing 36, and the rotary joint 38 are fitted within this through hole 31b1. A side surface of the housing 31b farthest from the leg segment 30a has a recess (not shown) like that provided in the leg segment 30a. The recess is covered with a side-surface cover 18b.

The rotary joint 38 is similar to the rotary joint 37 in the leg segment 30a, and includes a distributor 38a fixed to a cylindrical portion 70a1 of a bearing holder 70 and a shaft 38b rotatably fitted to a peripheral portion of the distributor 38a.

The distributor 38a is inserted into a through hole 70a4 in the bearing holder 70, and a flange portion 38a2 of the distributor 38a is joined to the bearing holder 70 with a plurality of screw members 70c arranged in the circumferential direction. Furthermore, the center of the distributor 38a is provided with a through hole 38a4 through which, for example, cables can extend toward the spindle unit 20.

The distributor 38a also has a plurality of fluid channels 38a3 that are arranged at different positions in the circumferential direction. The fluid channels 38a3 are provided for supplying or discharging fluid. On the other hand, the shaft 38b has a plurality of fluid channels 38b1 that correspond to the fluid channels 38a3 of the distributor 38a. In Fig. 1, only one of the fluid channels 38a3 and one of the fluid channels 38b1 are representatively shown.

The fluid channels 38a3 and the fluid channels 38b1 corresponding thereto communicate with each other through annular grooves extending around an engagement surface between the distributor 38a and the shaft 38b. This communication state is maintained even upon rotation of the shaft 38b. Furthermore, each of the fluid channels 38b1 communicates with a fluid supply or discharge port 24 of the spindle unit 20. The distributor 38a and the shaft 38b have seal members interposed therebetween for attaining a sealed state between the annular grooves.

The bearing holder 70 includes the above-described cylindrical portion 70a1, and a flange portion 70a2 extending outward radially from an end of the cylindrical portion 70a1 farthest from the leg segment 30a. The flange portion 70a2 of the bearing holder 70 is joined to the housing 31b with a plurality of screw members 38c arranged in the circumferential direction. Furthermore, the center of the bearing holder 70 is provided with a through hole 70a4 extending in the A-axis direction.

The leg segment 30b includes a rotary shaft 39 that corresponds to the rotary shaft 32 in the leg segment 30a. The rotary shaft 39 is constituted by a flange member 39b and the shaft 38b of the rotary joint 38 that is combined with the flange member 39b, and is rotatably supported on the bearing holder 70 by the bearing 36. The rotary shaft 39 (the flange member 39b and the shaft 38b of the rotary joint 38) is disposed such that a rotary axis line thereof is aligned with the rotary axis line (= A-axis) of the rotary shaft 32 in the leg segment 30a.

The flange member 39b has an end surface 39b1 at a side thereof proximate to the leg segment 30a. The end surface 39b1 is parallel to the end surface 32b of the rotary shaft 32 in the leg segment 30a. The end surface 39b1 has the spindle unit 20 fixed thereto with a plurality of screw members 15 arranged in the circumferential direction. Consequently, in the leg segment 30b, the rotary shaft 39 (the flange member 39b and the shaft 38b of the rotary joint 38) functions as the driven support shaft for supporting the spindle unit 20. An outer peripheral portion of the flange member 39b of the rotary shaft 39 is fixed to a cylindrical braking member 70b so that the braking member 70b rotates together with the rotary shaft 39. Accordingly, the braking member 70b is also part of the driven support shaft.

The clamp mechanism 34 for maintaining the rotational position (angular position) of the spindle unit 20 is mainly constituted by a clamp sleeve 34a. The clamp sleeve 34a includes a cylindrical portion 34a2 having an annular groove 34a1 that forms a pressure chamber, and a flange portion 34a3 extending outward radially from an end of the cylindrical portion 34a2 proximate to the leg segment 30a. The cylindrical portion 34a2 surrounds the braking member 70b in a manner such that the cylindrical portion 34a2 permits rotation of the braking member 70b.

The cylindrical portion 34a2 of the clamp sleeve 34a and the housing 31b have an annular pressure-receiving member 34b interposed therebetween. In detail, the pressure-receiving member 34b is fitted within the through hole 31b1 of the housing 31b. Furthermore, the cylindrical portion 34a2 of the clamp sleeve 34 is fitted within the inner periphery surface of the pressure-receiving member 34b. With screw members fastened to the flange portion 34a3, the clamp mechanism 34 is fixed to the housing 31b, and the pressure-receiving member 34b is fixed to the flange portion 34a3.

The cylindrical portion 34a2 of the clamp sleeve 34a has the annular groove 34a1 which is open towards the pressure-receiving member 34b. The annular groove 34a1 and the inner periphery surface of the pressure-receiving member 34b together form a pressure chamber. This pressure chamber communicates with a fluid channel 34b1 provided in the pressure-receiving member 34b. The fluid channel 34b1 communicates with a fluid channel 31b2 provided in the housing 31b through a fluid channel 34a4 provided in the flange portion 34a3 of the clamp sleeve 34a.

In the clamp mechanism 34, when pressure fluid (for example, pressure oil) is supplied to the pressure chamber through these fluid channels, a thin-walled section in the cylindrical portion 34a2 of the clamp sleeve 34a, which corresponds to the annular groove 34a1, becomes deformed inward in the radial direction of the cylindrical portion 34a2. As a result, a clamping force acts on the braking member 70b in the radially-inward direction, whereby a state (clamped state) is attained in which the braking member 70b and the rotary shaft 39 combined therewith are prevented from rotating. When the supply of pressure fluid to the pressure chamber is stopped, the thin-walled section of the cylindrical portion 34a2 becomes released from the deformed state. This eliminates the clamping force acting on the braking member 70b, thereby canceling the clamped state.

In the illustrated embodiment, the leg segment 30b also contains a rotation detector 41 for detecting the rotational angle of the rotary shaft 39 (i.e., the angular position of the spindle unit 20).

The rotation detector 41 includes a detector rotor 41b attached to the outer periphery surface of the shaft 38b at a predetermined position and a detector stator 41a attached to the shaft 38b at a position where the detector stator 41a faces the outer surface of the detector rotor 41a. A detection signal detected by the rotation detector 41 that indicates the angular position of the spindle unit 20 is sent to a control apparatus (not shown) of a machine tool in which the machining head 10 according to the present invention is installed. The detection signal is used for rotation control (numerical control) of the spindle unit 20. The rotation detector of the present invention is not limited to those having the above-described structure, and other common rotation detectors may also be used.

The second support head component 50 of the illustrated machining head 10 will be described in detail below.

As mentioned above, in addition to the first support head component 30, the machining head 10 in the embodiment is equipped with the second support head component 50 that supports the first support head component 30. The first support head component 30 is supported by, for example, a main-shaft head of the machine tool through the second support head component 50. The second support head component 50 is provided for rotating the first support head component 30 around an axis line (axis line parallel to the Z-axis of the machine tool, referred to as "C-axis" hereinafter) extending in the vertical direction (Fig. 3).

The second support head component 50 includes a housing 51 as a main body. The housing 51 has a through hole 51a that extends in the C-axis direction. The second support head component 50 also includes a rotary shaft 52 whose shaft member 52a is disposed within the through hole 51a. The first support head component 30 is combined with the second support head component 50 through the rotary shaft 52. The second support head component 50 is attached to, for example, the main-shaft head of the machine tool through an annular supporter 71 attached to the housing 51.

The second support head component 50 includes a DD motor 53 for rotating the rotary shaft 52, a clamp sleeve 54 for maintaining the rotational position of the rotary shaft 52, and a rotary joint 55 for supplying fluid to the first support head component 30, which are all disposed within the through hole 51a of the housing 51.

The DD motor 53 is constituted by a stator 53a fixed to the housing 51 through a stator sleeve 53c, and a rotor 53b fixed to the rotary shaft 52 at a position facing an inner periphery surface of the stator 53a. An exciting current for driving the DD motor 53 is supplied by a cable 17 connected to the DD motor 53 through a connector 17a.

The rotary shaft 52 includes the shaft member 52a disposed rotatably within the through hole 51a of the housing 51, and a flange member 52b attached to an end of the shaft member 52a proximate to the first support head component 30 and extending outward radially (in directions perpendicular to the C-axis). The rotary shaft 52 has a through hole 52c through which the rotary joint 55 extends.

As shown in the figure, the shaft member 52a and the flange member 52b of the rotary shaft 52 have a bearing housing 52d therebetween. The bearing housing 52d and the housing 51 have a bearing 56 interposed therebetween. With the bearing 56, the rotary shaft 52 is supported in a rotatable fashion with respect to the housing 51. The bearing 56 in Fig. 3 is a triple cylindrical roller bearing (triple roller bearing/axial-radial roller bearing), which is a type of compound-roller pivot bearing, and is capable of receiving large amounts of load in the axial and radial directions.

The rotor 53b of the DD motor 53 is fitted around an outer periphery surface of the shaft member 52a. Thus, when the rotor 53b rotates, the shaft member 52a is rotated about the C-axis. The flange member 52b is joined to the shaft member 52a with a plurality of screw members 52e arranged in the circumferential direction and thus rotates together with the shaft member 52a. Furthermore, the flange member 52b has a plurality of screw members 19 fastened thereto in the circumferential direction. With the screw members 19, the supporting segment 30c of the first support head component 30 is joined to the flange member 52b. Accordingly, when the DD motor 53 rotates the rotary shaft 52, the first support head component 30 is rotated together with the rotary shaft 52.

The rotary joint 55 is similar to the rotary joints 37, 38 in the first support head component 30, and includes a distributor 55a fixed to the housing 51 and a shaft 55b rotatably fitted within a through hole 55a1 provided in the distributor 55a and disposed concentrically with the C-axis of the distributor 55a.

The distributor 55a is constituted by a cylindrical portion 55a2 disposed within the through hole 52c of the rotary shaft 52 and a flange portion 55a3 extending outward radially from an end of the cylindrical portion 55a2 farthest from the first support head component 30. The flange portion 55a3 of the distributor 55a is joined to the housing 51 with a plurality of screw members arranged in the circumferential direction.

On the other hand, the shaft 55b is joined to a disc-shaped flange member 57 at an end thereof proximate to the first support head component 30. The shaft 55b is joined to the flange member 52b of the rotary shaft 52 through the flange member 57. Consequently, the shaft 55b rotates together with the rotary shaft 52. The flange member 57 has a shape that can be fitted to a circular recess 30c1 provided in the supporting segment 30c of the first support head component 30. With the flange member 57 and the recess 30c1 of the supporting segment 30c, the first support head component 30 and the second support head component 50 can be properly positioned with respect to each other when the two are combined.

The distributor 55a has a plurality of fluid channels 55a4 arranged at different positions in the circumferential direction. The fluid channels 55a4 are provided for taking in fluid from the outside. On the other hand, the shaft 55b also has a plurality of fluid channels 55b1 that correspond to the fluid channels 55a4 of the distributor 55a. Similarly, the fluid channels 55b1 are arranged at different positions in the circumferential direction.

The fluid channels 55a4 and the fluid channels 55b1 corresponding thereto communicate with each other through annular grooves extending around an engagement surface between the distributor 55a and the shaft 55b. This communication state is maintained even upon rotation of the shaft 55b. Furthermore, the fluid channels 55b1 in the shaft 55b communicate with the corresponding fluid channels 37a3 or 38a3 provided in the distributor 37a or 38a of the rotary joint 37 or 38 in the first support head component 30. Accordingly, fluid supplied to the distributor 55a of the rotary joint 55 from the outside is sent to the rotary joints 37, 38 of the first support head component 30 via the shaft 55b.

The distributor 55a fixed to the housing 51 and the shaft member 52a of the rotary shaft 52 have the clamp sleeve 54 disposed therebetween for maintaining the rotational position of the rotary shaft 52. The clamp sleeve 54 has a flange portion 54a at which the clamp sleeve 54 is joined to the distributor 55a with a plurality of screw members, and is relatively rotatable with the rotary shaft 52. The clamp sleeve 54 has a cylindrical portion 54b provided with an annular groove 54c which is open towards the cylindrical portion 55a2 of the distributor 55a. The annular groove 54c and the outer periphery surface of the cylindrical portion 55a2 of the distributor 55a form a pressure chamber.

When pressure fluid is supplied to the pressure chamber through a fluid channel 54d provided in the distributor 55a, a thin-walled section of the cylindrical portion 54b, which corresponds to the annular groove 54c of the cylindrical portion 54b, becomes deformed outward in the radial direction of the cylindrical portion 54b. As a result, a clamping force acts on the rotary shaft 52 in the radially-outward direction, whereby a state (clamped state) is attained in which the rotary shaft 52 is prevented from rotating.

In the illustrated embodiment, an upper end portion of the rotary joint 55 is provided with a rotation detector 44 for detecting the amount of rotation of the rotary shaft 52, namely, the amount of rotation of the first support head component 30. The rotation detector 44 includes a pair of detector heads 44a, 44a disposed at predetermined positions on the distributor 55a, and a detector ring 44b which is attached to the shaft 55b rotatable together with the rotary shaft 52 and is disposed facing the detector heads 44a, 44a. Similar to the rotation detector 41 in the first support head component 30, a detection signal of the rotation detector 44 is sent to the control apparatus of the machine tool and is used for rotation control of the first support head component 30.

In the machining head 10 having the above-described configuration, the support head component (the first support head component 30) for supporting the spindle unit 20 sandwiches the spindle unit 20 between the two support shafts of the pair of leg segments 30a, 30b so as to securely support the spindle unit 20 in a relatively non-rotatable fashion with respect to the two support shafts. Using the DD motor 33 to rotate the driving support shaft of the leg segment 30a, the spindle unit 20 is rotated about the rotary axis line of the support shafts (i.e., axis line extending perpendicular to the rotary axis line of the spindle 21, or A-axis) to a desired angular position.

The DD motor 33 is driven in accordance with numerical control based on a preliminarily set program. With rotation control of the rotor 33a, the angular position of the spindle unit 20 is controlled via the driving support shaft. Consequently, the DD motor 33 and the driving support shaft (i.e., the rotary shaft 32 and the shaft 37b) linked with the DD motor 33 within the leg segment 30a function as an index mechanism for the spindle unit 20. An exciting current for driving the DD motor 33 is supplied by a cable 16 connected to the DD motor 33 through a connector 16a.

In the first support head component 30 according to the first invention, the bearing 35 that supports the spindle unit 20 and rotatably supports the support shaft (the driving support shaft) is disposed within the range occupied by the DD motor 33 in the A-axis direction, and within the rotor 33a of the inner-rotor-type DD motor 33 in the radial direction thereof. Thus, the bearing 35 is housed within a space located within the DD motor 33 in the radial direction thereof, thereby preventing the dimension of the leg segment 30a in the A-axis direction from increasing.

On the other hand, with regard to the leg segment 30b, the dimension thereof in the A-axis direction is determined on the basis of the length (A-axis dimension) of the support shaft (the driven support shaft). In view of the balance of load to be imparted upon a machining process, it is preferable that the length of the support shaft in the leg segment 30b be substantially equal to the length of the support shaft in the leg segment 30a. Thus, the A-axis dimension of the leg segment 30b is dependent on that of the leg segment 30a. This implies that the smaller the A-axis dimension of the leg segment 30a, the smaller the A-axis dimension of the leg segment 30b. Consequently, the first support head component 30 can be entirely reduced in dimension in the A-axis direction, whereby a compact machining head 10 can be attained.

In addition, with the first invention, a bearing with a reduced diameter can be employed. On the other hand, a bearing with a larger diameter can lead to lower run-out accuracy, which is one of the factors that can cause deterioration in the machining accuracy. In contrast, according to the embodiment, such deterioration in the machining accuracy caused by a bearing with a large diameter is prevented from occurring.

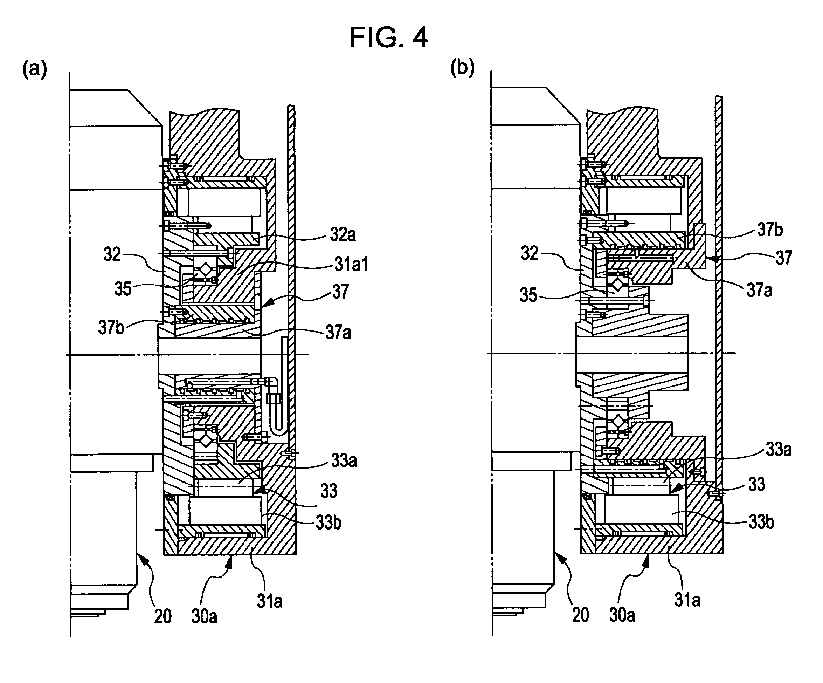

In the first support head component 30 included in the machining head 10 described above, the bearing 35 between the support shaft in the leg segment 30a and the cylindrical portion 31a1 of the housing 31a is disposed between the shaft 37b of the rotary joint 37 and the cylindrical portion 31a1 of the housing 31a. Alternatively, the bearing 35 may be disposed between the cylindrical portion 32a of the rotary shaft 32 and the cylindrical portion 31a1 of the housing 31a, as shown in Fig. 4(a). In the machining head of the present invention, the bearing 35 is not limited to be disposed within the range occupied by the DD motor in the A-axis direction like the first support head component 30. The bearing 35 may be disposed at any position as long as at least the bearing 35 is partly disposed within the range occupied by the DD motor in the A-axis direction.

Furthermore, in the first support head component 30, the rotary joint 37 is located closest to the A-axis, and the bearing 35 is fitted around the outer periphery surface of the rotary joint 37 (the shaft 37b). Alternatively, the rotary joint 37 may be provided around the outer periphery surface of the bearing 35, as shown in Fig. 4(b).

Specifically, in the first support head component 30, the support shaft (i.e., the shaft 37b of the rotary joint 37 and the rotary shaft 39) has a large-diameter section around which the rotor 33a of the DD motor 33 is fitted, and a shaft section disposed within this large-diameter section in the radial direction and supported rotatably by the bearing 35. In this case, the large-diameter section is defined by the cylindrical portion 32a of the rotary shaft 32, and the shaft section is defined by the shaft 37b of the rotary joint 37. Alternatively, the large-diameter section may be defined by the shaft 37b of the rotary joint 37, and the rotor 33a of the DD motor 33 may be fitted around the outer periphery surface of the large-diameter section.

The second invention will now be described. In the above-described first support head component 30 of the second invention, the DD motor 33 that rotates the spindle unit 20 is disposed only in the leg segment 30a of the two leg segments 30a, 30b. Specifically, in the support head component of the present invention, unlike the conventional configuration, the two support shafts for supporting the spindle unit do not define driving shafts, but one of the support shafts defines the driving shaft, whereas the other of the support shafts only has a function of supporting the spindle unit.

Also, in this embodiment, the other leg segment 30b without the DD motor 33 accommodates the rotation detector 41 for detecting the rotational phases of the two support shafts (i.e., the angular position of the spindle unit 20) rotating together with the spindle unit 20, and the clamp mechanism 34 for maintaining the angular position of the indexed spindle unit 20. In other words, in the support head component of this embodiment, only the one of the two support portions (the leg segment 30a, 30b) accommodates the DD motor, and the other support portion (the leg segment 30b) having a space because the DD motor is not disposed therein has the rotation detector and the clamp mechanism collectively.

With the configuration, even when the support head component supports the spindle unit by sandwiching the spindle unit by the two support shafts in order to increase support stiffness, the dimension of the support head component in the axial direction of the support shafts is prevented from being increased as compared with the conventional configuration in which drive motors are disposed respectively in the support shafts. Thus, the machining head can be avoided from being increased in the overall size.

In particular, in the support head component, in which the rotary joint is disposed in each support portion is used like this embodiment, the arrangement of other members is restricted by the arrangement of the DD motor, the bearing, and the rotary joint. Hence, when the DD motor, the rotation detector, and the clamp mechanism are disposed in the single support portion, the dimension in the axial direction of the support shaft has to be increased. In contrast, with the present invention, since the DD motor is not disposed in one of the support portions, at least one of the rotation detector and the clamp mechanism is disposed in the support portion which is not provided with the DD motor. Accordingly, the dimension in the axial direction of the support shaft can be decreased as compared with the conventional support head component.

In the machining head of the above-described second invention, the support head component (the first support head component 30), the rotation detector, and the clamp mechanism are disposed in the support portion (the second support portion/the leg segment 30b) which is not provided with the DD motor. However, the present invention is not limited thereto, and one of the rotation detector and the clamp mechanism may be disposed in the support portion (the first support portion or the leg segment 30a) equipped with the DD motor. With this configuration, the dimension in the axial direction of the support shaft can be decreased as compared with a configuration in which DD motors are disposed in both support portions.

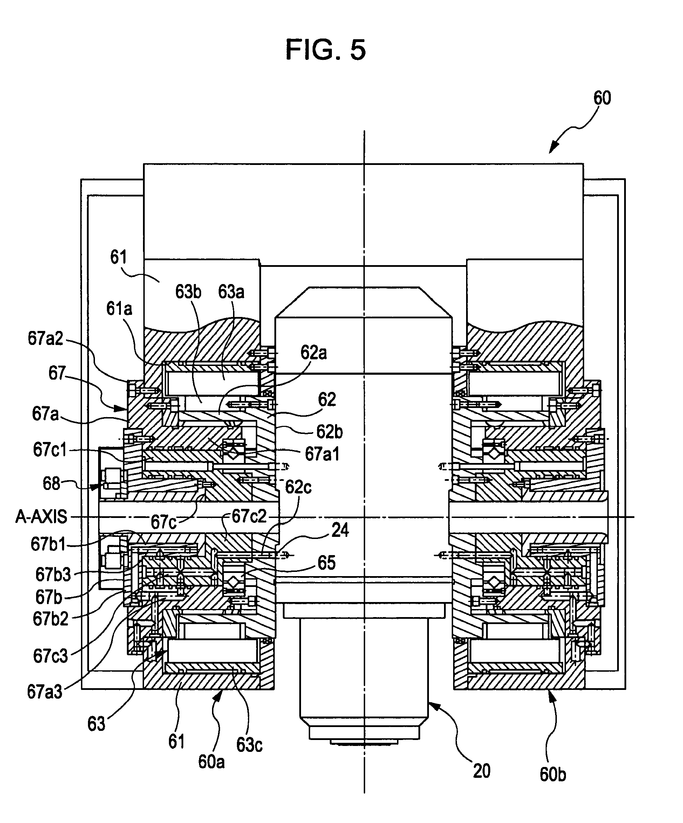

Another embodiment which does not belong to the invention will now be described with reference to Fig. 5.

In the support head component (the first support head component 30) of the machining head to which the first invention is applied, only one of the leg segments of a pair for supporting the spindle unit 20 is provided with an index mechanism (DD motor) for rotating the spindle unit 20. In contrast, the embodiment shown in Fig. 5 is characterized in that both leg segments of the support head component are provided with index mechanisms (DD motors), and that the first invention is applied to both index mechanisms.

In a support head component 60 shown in Fig. 5, a pair of leg segments 60a, 60b supporting the spindle unit 20 is both provided with index mechanisms including DD motors 63. The leg segments 60a, 60b in the figure have substantially the same internal configuration. Therefore, the description below will simply be directed to the leg segment 60a, and the description and reference numerals with regard to the leg segment 60b will be omitted.

The leg segment 60a has a housing 61 as a main body. The housing 61 has a through hole 61a that extends in the A-axis direction. The through hole 61a has disposed therein, for example, a DD motor 63, a support shaft that supports the spindle unit 20, a bearing 65 for rotatably supporting the support shaft, and a rotary joint 67. The leg segment 60a is also provided with a rotation detector 68, which is similar to that provided in the former embodiment. (The rotation detector 68 is provided only in the leg segment 60a.)

In the figure, the rotary joint 67 has a distributor that is constituted by two members 67a, 67b (i.e., first and second distributors). The second distributor 67b has a flange portion 67b2 at which the second distributor 67b is joined to the first distributor 67a. The first distributor 67a has a flange portion 67a2 at which the first distributor 67a is joined to the housing 61. Thus, the first and second distributors 67a, 67b are secured to the housing 61.

The rotary joint 67 has a shaft 67c, which is constituted by a large-diameter section 67c1 rotatably fitted between a cylindrical portion 67a1 of the first distributor 67a and a cylindrical portion 67b1 of the second distributor 67b, and by a shaft section 67c2 around which the bearing 65 is fitted.

In the rotary joint 67, the first and second distributors 67a, 67b have a plurality of fluid channels 67a3, 67b3. The shaft 67c has a plurality of fluid channels 67c3 that correspond to the fluid channels 67a3, 67b3. The fluid channels 67a3, 67b3, and the fluid channels 67c3 communicate with each other through annular grooves extending around engagement surfaces among the cylindrical portions 67a1, 67b1 of the first and second distributors 67a, 67b, and the large-diameter section 67c1 of the shaft 67c.

A rotary shaft 62 provided rotatably with respect to the housing 61 is joined to the shaft section 67c2 of the shaft 67c at a side proximate to the leg segment 60b. The rotary shaft 62 has a cylindrical portion 62a that surrounds the cylindrical portion 67a1 of the first distributor 67a included in the rotary joint 67. The rotary shaft 62 also has a plurality of fluid channels 62c that communicate with the fluid channels 67c3 provided in the shaft 67c of the rotary joint 67. Each of the fluid channels 67c3 communicates with the corresponding port 24 of the spindle unit 20 through the corresponding fluid channel 62c.

As shown the figure, the cylindrical portion 67a1 of the first distributor 67a and the shaft section 67c2 of the shaft 67c in the rotary joint 67 fixed to the housing 61 have the bearing 65 interposed therebetween. With the bearing 65, the shaft 67c is supported in a rotatable fashion with respect to the housing 61. The rotary shaft 62 is combined with the shaft 67c rotatably supported by the bearing 65, and an end surface 62b of the rotary shaft 62 proximate to the leg segment 60b has the spindle unit 20 attached thereto. Accordingly, the shaft 67c of the rotary joint 67 and the rotary shaft 62 are provided in a rotatable fashion with respect to the housing 61 and correspond to a support shaft for supporting the spindle unit 20.

The DD motor 63 is an inner-rotor-type DD motor constituted by a stator 63a secured to the housing 61 through a stator sleeve 63c, and a rotor 63b fitted around an outer periphery surface of the cylindrical portion 62a of the rotary shaft 62 at a position facing an inner periphery surface of the stator 63a.

Accordingly, in the support head component 60 shown in the figure, the rotor 63b of the inner-rotor-type DD motor 63 is fitted around the cylindrical portion 62a of the rotary shaft 62 that surrounds the cylindrical portion 67a1 of the first distributor 67a. On the other hand, the bearing 65 for rotatably supporting the support shaft is interposed between the cylindrical portion 67a1 of the first distributor 67a and the shaft section 67c2 of the shaft 67c disposed within the cylindrical portion 67a1 in the radial direction.

That is, in this embodiment, the support shaft (the rotary shaft 62 and the shaft 67c of the rotary joint 67) has a large-diameter section (the cylindrical portion 62a of the rotary shaft 62) around which the rotor 63b of the DD motor 63 is fitted, and a shaft section (the shaft 67c of the rotary joint 67) disposed within this large-diameter section in the radial direction and supported rotatably by the bearing 65. A cylindrical member (the cylindrical portion 67a1 of the first distributor 67a, corresponding to "cylindrical portion" of the first invention) secured to the housing 61 is disposed between the large-diameter section and the shaft section. Also, the bearing 65 is interposed between the cylindrical member and the support shaft. Thus, the support shaft is rotatably supported with respect to the housing 61.

Accordingly, the bearing 65 for rotatably supporting the support shaft is disposed within the rotor 63b of the DD motor 63 in the radial direction for rotating the support shaft. In addition, the positioning of the bearing 65 in the A-axis direction is within the range occupied by the DD motor 63 in the A-axis direction, as shown in the figure. Consequently, this embodiment can achieve similar advantages to those achieved in the former embodiment shown in Fig. 1. In particular, like the case of the support head component 60 according to this embodiment where each of the leg segments 60a, 60b of a pair is provided with an index mechanism including a DD motor 33, the dimension in the A-axis direction can become large as compared with the support head component in the former embodiment shown in Fig. 1. Thus, the present invention is especially effective for a support head component of such a case.

The first and second inventions are not limited to the above-described embodiments and may be modified within the scope of the claims.

## Claims

1. A machining head (10) for a machine tool, comprising a spindle unit (20) including a spindle (21) to which a tool is attachable and a support head component (30) that supports the spindle unit (20), the support head component (30) including an index mechanism that rotates the spindle unit (20) at least about an axis line extending
perpendicular to a rotary axis line of the spindle (21) in order to index an angular position of the spindle unit (20),
wherein the support head component (30) includes first and second support portions (30a, 30b) respectively including first and second support shafts (32, 37b, 38b, 39b) disposed such that axes of the first and second support shafts (32, 37b, 38b, 39b) are aligned with the rotary axis line and that the first and second support shafts (32, 37b, 38b, 39b) face each other with the spindle unit (20) interposed therebetween, wherein the index mechanism includes a drive motor (33) including a motor rotor (33a) and a motor stator (33b), the motor rotor (33a) being disposed concentrically with the support shaft (32, 37b) around the support shaft (32, 37b) within a housing (31a) of the support head component (30) and surrounding the support shaft (32, 37b), and wherein the index mechanism is disposed at one of the first and second support portions (30a, 30b).

2. The machining head (10) for a machine tool according to claim 1, wherein the support head component (30) includes a rotation detector (41) for detecting a rotation phase of the support shaft (38b, 39b), the rotation detector (41) being disposed at the other of the first and second support portions (30a, 30b) which is not provided with the drive motor (33).

3. The machining head (10) for a machine tool according to claim 1 or 2, wherein the support head component (30) includes a clamp mechanism (34) for detecting an angular position of the spindle unit (21), the clamp mechanism (34) being disposed at the other of the first and second support portions (30a, 30b) which is not provided with the drive motor (33).

4. The machining head for a machine tool according to any of claims 1 to 3, wherein at least part of a bearing (35) for rotatably supporting the support shaft (32, 37b) is disposed within the motor rotor (33 a) in a radial direction within a range occupied by the drive motor (33) in a rotary axis line direction of the support shaft (32, 37b).

5. The machining head for a machine tool according to any of claims 1 to 4,
wherein the support shaft (32, 37b) has a large-diameter section (32a) around which the motor rotor (33a) is fitted, and a shaft section (37b) rotatably supported by the bearing (35),
wherein the housing (31a) has a cylindrical portion (3 1a1) disposed between the large-diameter section (32a) and the shaft section (37b), and
wherein the bearing (35) is interposed between the cylindrical portion (31a1) and the support shaft (32, 37b).
